# EUROPEAN PATENT SPECIFICATION

(11) **EP 4 540 466 B1**
(45) Date of publication and mention of the grant of the patent: **29.04.2026**
(21) Application number: 23729259.4
(22) Date of filing: 15.05.2023
(51) Int. Cl.: E02F 9/08, E02F 9/22, B60S 9/00, B66C 23/78

(54) **AUTOMATIC LEVELLING OF WORK MACHINE**
AUTOMATISCHE NIVELLIERUNG EINER ARBEITSMASCHINE
MISE À NIVEAU AUTOMATIQUE DE MACHINE DE TRAVAIL

(30) Priority: 17.06.2022 GB 202208923
(43) Date of publication of application: 23.04.2025
(73) Proprietor: Caterpillar, Inc., Peoria, IL 61629-6450 (US)
(72) Inventor: RIEDERER, Marco, 93158 Teublitz (DE); LIPPA, Tobias, 92421 Schwandorf (DE)
(74) Representative: Novagraaf Group
(86) International application number: PCT/US2023/022202
(87) International publication number: WO 2023/244377

(56) References cited:
- US-A- 5 580 095
- US-A1- 2010 100 280

## Description

### Field of the Disclosure

The disclosure relates to the field of work machines.

### Background

Work machines such as wheeled excavators or material handlers are known to be equipped with stabilisers fitted to the undercarriage. These stabilisers may be arranged in pairs at the front and/or the rear of the undercarriage.

Typically, the stabilisers are used to support the work machine while the machine tools are in operation (for example excavating or moving material) to provide a wider and more stable surface than the wheels, and without the damping effects of wheels. In use, an operator may extend all stabilisers to their maximum length. If the work machine is not level, the operator may then adjust each stabiliser one after the other to correct for the slope, requiring the operator to have good skills in adjusting the stabilisers individually and a good understanding of the ground topography.

Patent document US 2010/100280 A1 represents a relevant piece of prior art.

### Summary of the Disclosure

Against this background, there is provided: a method of adjusting a first plane of a work machine, wherein the work machine comprises a first adjustable stabiliser, a second adjustable stabiliser, a third adjustable stabiliser, a fourth adjustable stabiliser and a tilt sensor. The first, second, third and fourth adjustable stabilisers are each extendable between a minimum extension and a maximum extension, wherein a difference in length between the minimum extension and the maximum extension is the same for each adjustable stabiliser. The first, second, third and fourth adjustable stabilisers are configured to support the work machine when a distal end of each adjustable stabiliser is in contact with a ground surface. A first stabiliser pair comprises the first adjustable stabiliser and the second adjustable stabiliser. A second stabiliser pair comprises the second adjustable stabiliser and the third adjustable stabiliser. The method comprises:
a. extending the first, second, third and fourth adjustable stabilisers to a first configuration, wherein in the first configuration each adjustable stabiliser is at a calibration extension and the first plane is parallel to a reference plane defined by points of contact of the distal ends of the first, second, third and fourth adjustable stabilisers with the ground surface;
b. adjusting the first stabiliser pair such that the first, second, third and fourth adjustable stabilisers arrive at a second configuration, wherein in the second configuration:
   either the tilt sensor indicates that the first plane is parallel to a first axis of a target plane; or
   the first adjustable stabiliser and the second adjustable stabiliser have reached the maximum extension;
c. adjusting the second stabiliser pair such that the first, second, third and fourth adjustable stabilisers arrive at a third configuration, wherein in the third configuration:
   either the tilt sensor indicates that the first plane is parallel to a second axis of the target plane; or
   the second adjustable stabiliser and the third adjustable stabiliser have reached maximum extension.

**In** this way, the first plane of the work machine may be adjusted so that it is close to parallel to a target plane, even if the supporting ground surface is not parallel to the target plane.

There is also provided: a device for adjusting a first plane of a work machine, wherein the device comprises a first adjustable stabiliser, a second adjustable stabiliser, a third adjustable stabiliser and a fourth adjustable stabiliser. The first, second, third and fourth adjustable stabilisers are each extendable between a minimum extension and a maximum extension, wherein a difference in length between the minimum extension and the maximum extension is the same for each adjustable stabiliser. The first, second, third and fourth adjustable stabilisers are configured to support the work machine when a distal end of each adjustable stabiliser is in contact with a ground surface. A first stabiliser pair comprises the first adjustable stabiliser and the second adjustable stabiliser. A second stabiliser pair comprises the second adjustable stabiliser and the third adjustable stabiliser. The device further comprises a tilt sensor and a controller configured to:
a. extend the first, second, third and fourth adjustable stabilisers to a first configuration, wherein in the first configuration each adjustable stabiliser is at a calibration extension and the first plane is parallel to a reference plane defined by points of contact of the distal ends of the first, second, third and fourth adjustable stabilisers with the ground surface;
b. adjust the first stabiliser pair such that the first, second, third and fourth adjustable stabilisers arrive at a second configuration, wherein in the second configuration:
   either the tilt sensor indicates that the first plane is parallel to a first axis of a target plane; or
   the first adjustable stabiliser and the second adjustable stabiliser have reached the maximum extension;
c. adjust the second stabiliser pair such that the first, second, third and fourth adjustable stabilisers arrive at a third configuration, wherein in the third configuration:
   either the tilt sensor indicates that the first plane is parallel to a second axis of the target plane; or
   the second adjustable stabiliser and the third adjustable stabiliser have reached maximum extension.

### Brief Description of the Drawings

A specific embodiment of the disclosure will now be described, by way of example only, with reference to the accompanying drawings in which:
Figure 1 shows a schematic diagram of a perspective view of a work machine comprising a device for adjusting a first plane of the work machine, according to an embodiment of the present disclosure.
Figure 2 shows a schematic diagram of a top view of a work machine comprising a device for adjusting a first plane of the work machine, according to an embodiment of the present disclosure.
Figure 3 shows a flow diagram illustrating a method of adjusting a first plane of a work machine, according to an embodiment of the present disclosure.
Figure 4 shows a flow diagram illustrating a method of adjusting a first plane of a work machine, according to an embodiment of the present disclosure.
Figure 5 shows a flow diagram illustrating a method of adjusting a first plane of a work machine, according to an embodiment of the present disclosure. Figure 5A shows a method wherein steps are repeated in an event that the first plane is not parallel to a target plane after step 330. Figure 5B shows a method wherein further steps are carried out in an event that the first plane is not parallel to a target plane after step 330.
Figure 6 shows a schematic diagram of a top view of a work machine comprising a device for adjusting a first plane of the work machine according to an embodiment of the present disclosure, with a first axis and a second axis illustrated by arrows.
Figure 7 shows a schematic diagram of a top view of a work machine comprising a device for adjusting a first plane of the work machine according to an embodiment of the present disclosure, with a first axis and a second axis illustrated by arrows.
Figure 8 shows a schematic diagram of a first adjustable stabiliser and a second adjustable stabiliser of the device for adjusting a first plane of the work machine according to an embodiment of the present disclosure.
Figure 9 shows a schematic diagram of a top view of a work machine comprising a device for adjusting a first plane of the work machine according to an embodiment of the present disclosure, wherein the upper carriage of the work machine is rotated with respect to the under carriage of the work machine.
Figures 10 to 16 illustrate a method of adjusting a first plane of a work machine, according to an embodiment of the present disclosure. Figures 10 to 16 show schematic diagrams of a top view of the work machine, with arrows indicating which of the adjustable stabilisers are being adjusted. An arrow pointing away from the work machine indicates that the stabiliser may be extended; an arrow pointing towards the work machine indicates that the stabiliser may be retracted, and a double-ended arrow indicates that the stabiliser may be extended or retracted.

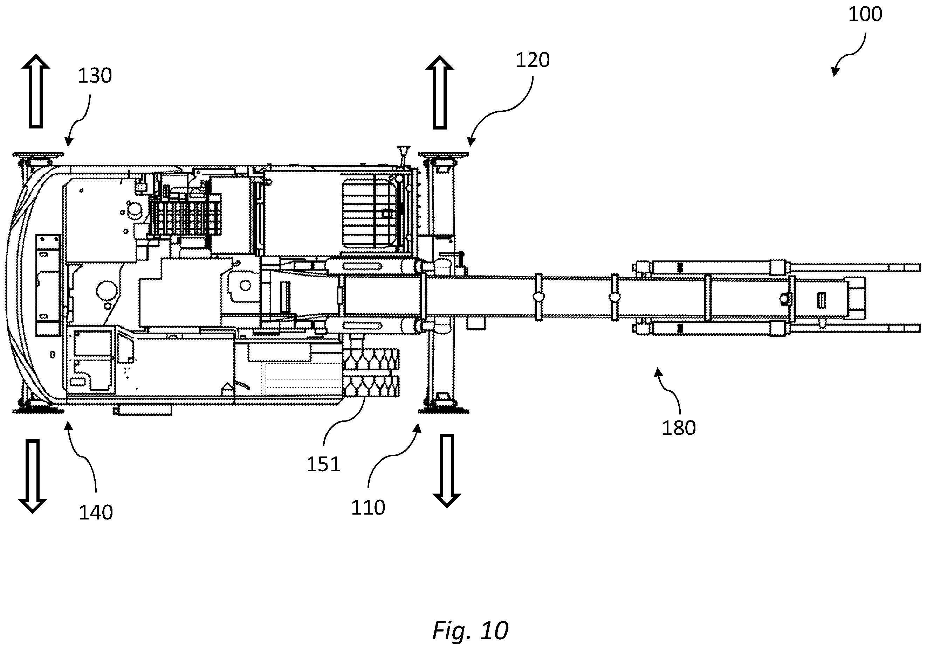

Figure 10 shows the first, second, third and fourth adjustable stabilisers being extended.

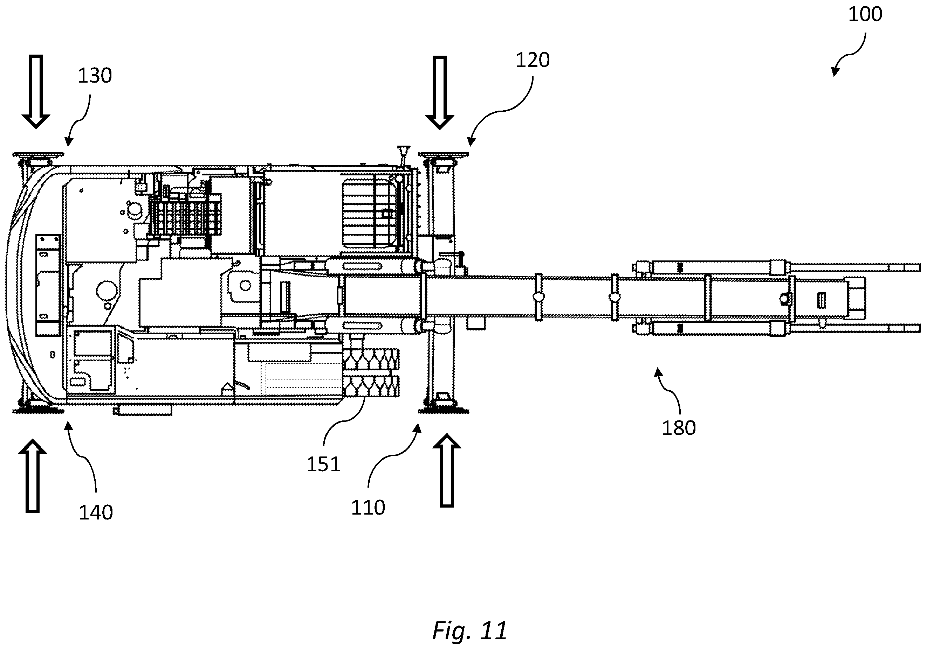

Figure 11 shows the first, second, third and fourth adjustable stabilisers being retracted.

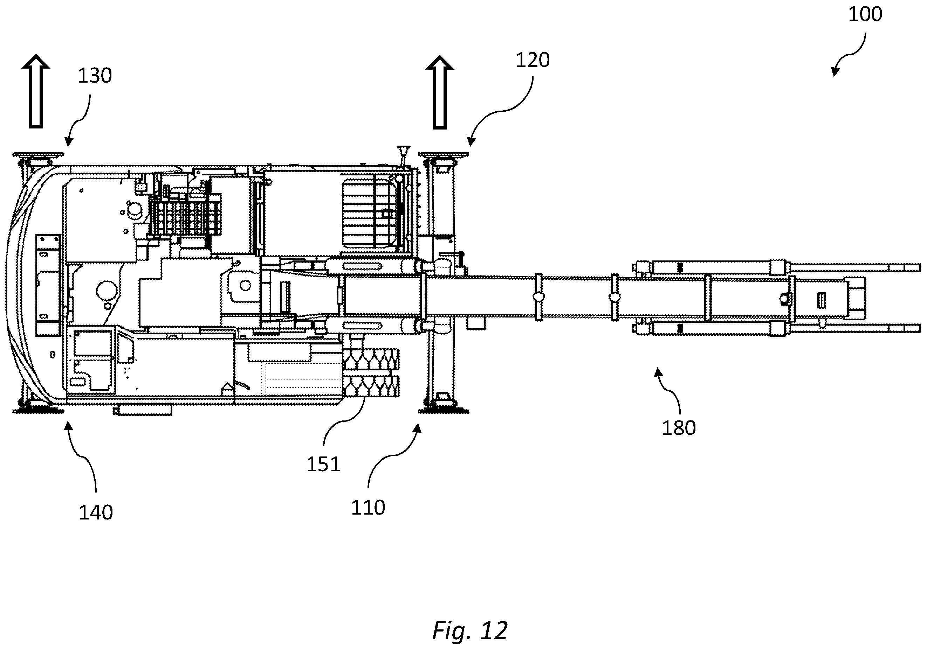

Figure 12 shows the first stabiliser pair being extended.

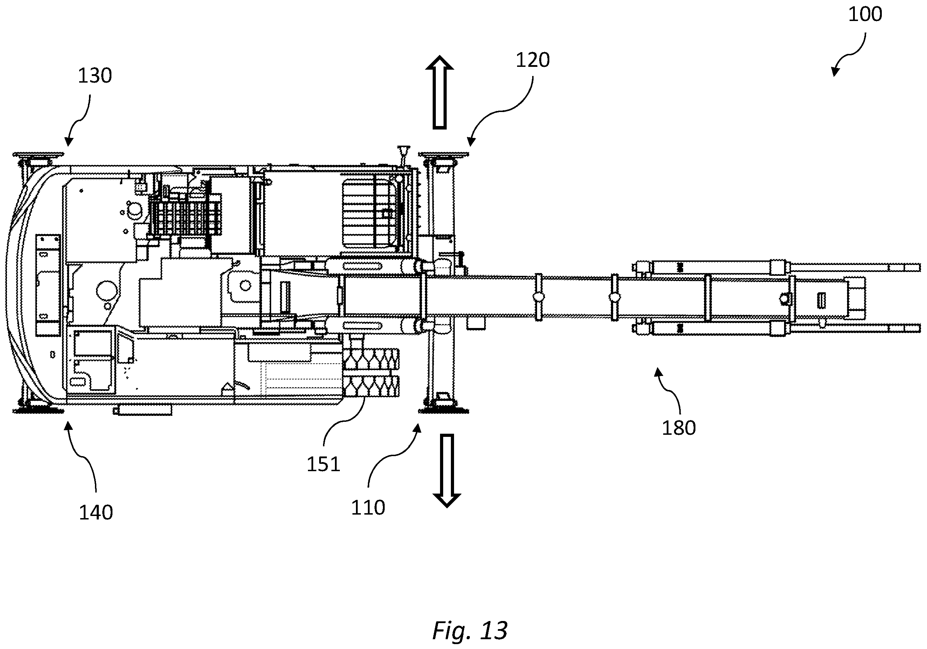

Figure 13 shows the second stabiliser pair being extended.

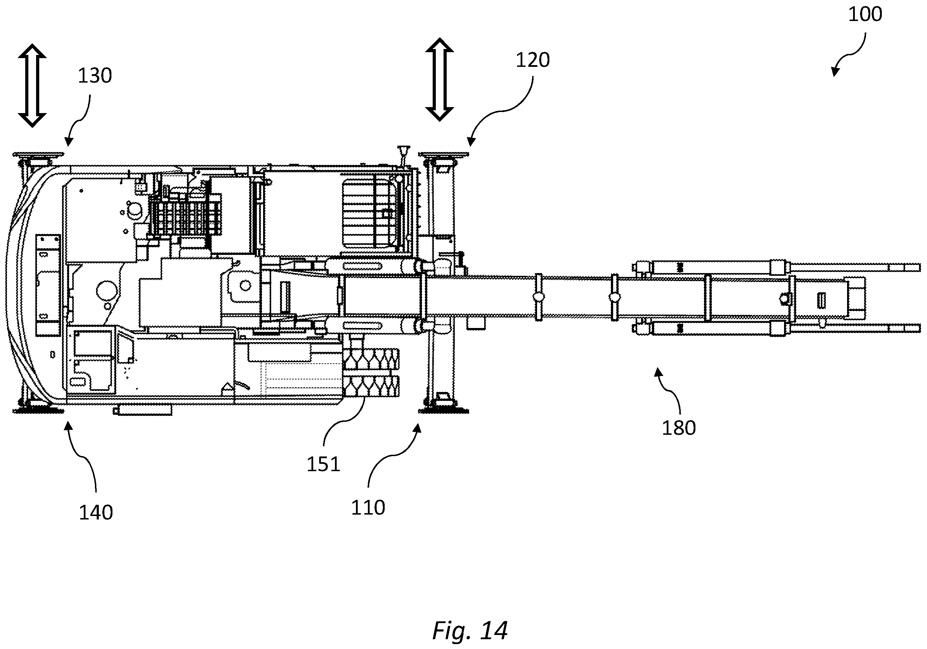

Figure 14 shows the first stabiliser pair being adjusted by either extension or retraction.

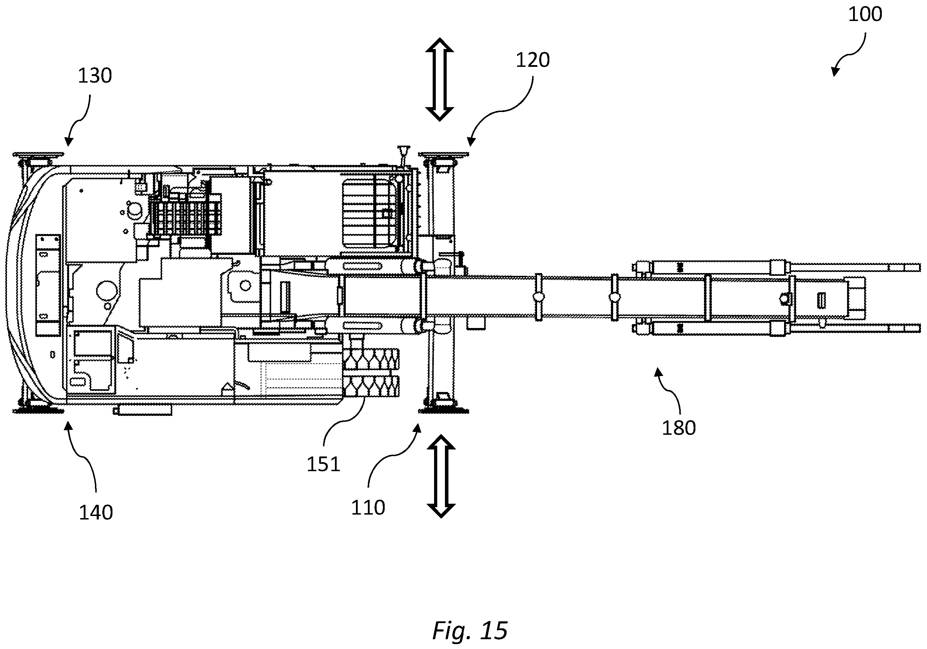

Figure 15 shows the second stabiliser pair being adjusted by either extension or retraction.

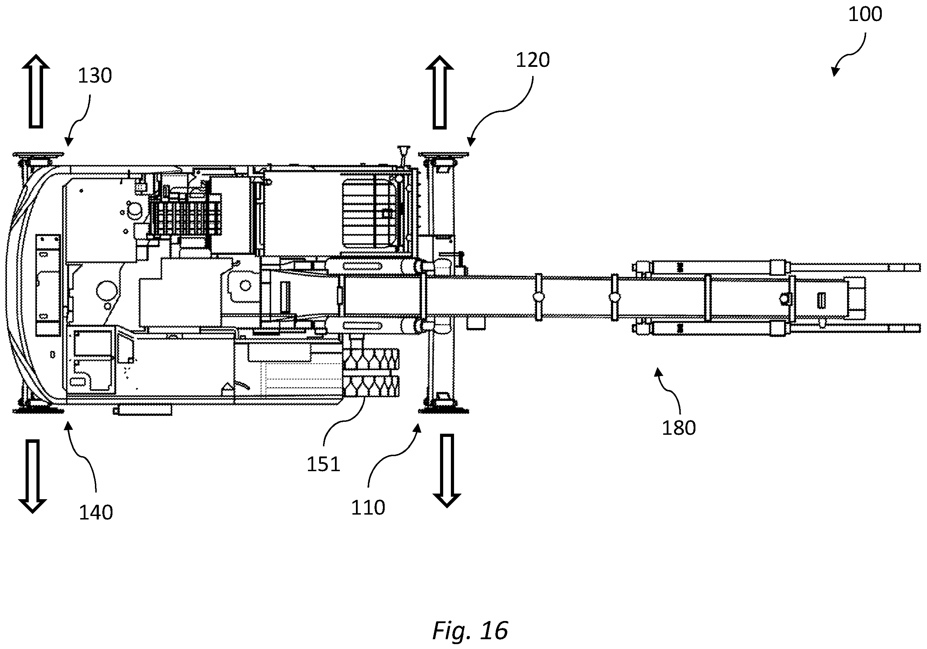

Figure 16 shows the first, second, third and fourth adjustable stabilisers being extended.

### Detailed Description

A device according to an embodiment of the present disclosure for adjusting a first plane of a work machine comprises a first adjustable stabiliser, a second adjustable stabiliser, a third adjustable stabiliser, a fourth adjustable stabiliser and a tilt sensor. The work machine may comprise the device for adjusting the first plane of a work machine.

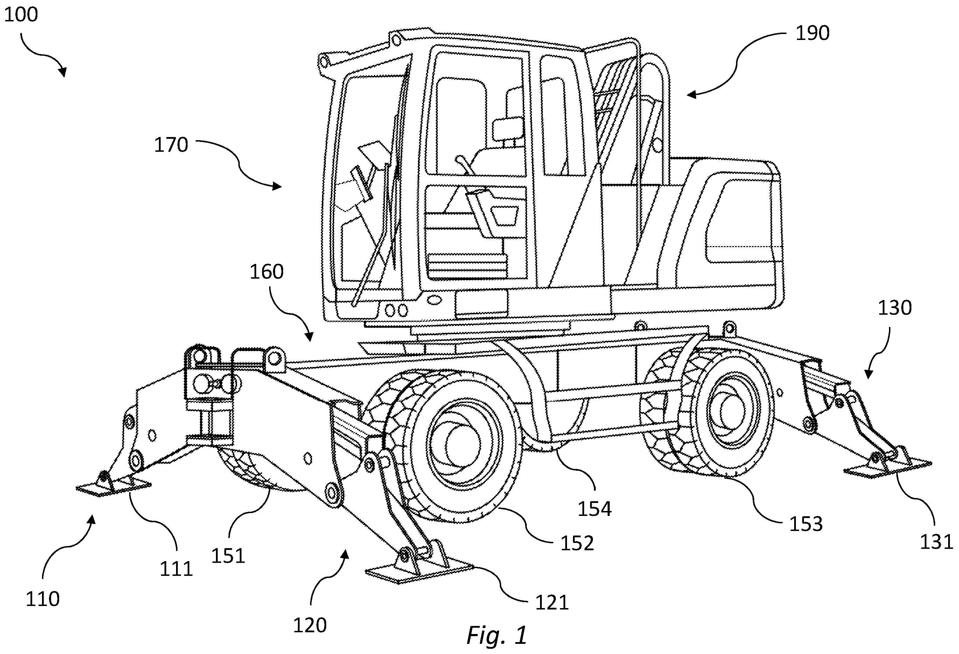

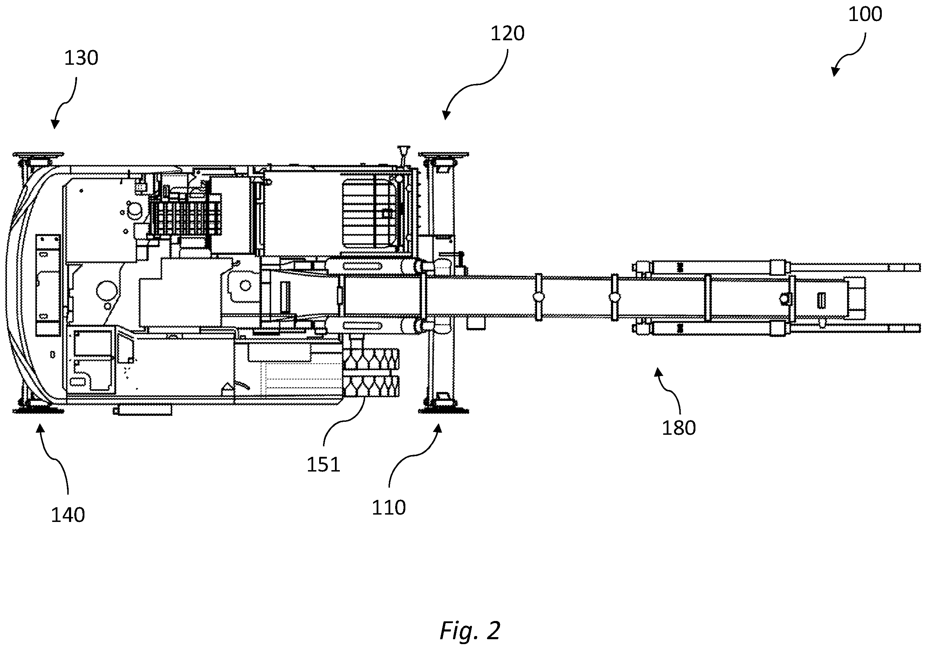

With reference to Figures 1 and 2, a work machine 100 is shown comprising a device for adjusting a first plane of the work machine according to an embodiment of the present disclosure. Figure 1 shows a perspective view of the work machine 100, and Figure 2 shows a top view of the work machine 100. The work machine 100 comprises a first adjustable stabiliser 110, a second adjustable stabiliser 120, a third adjustable stabiliser 130 and a fourth adjustable stabiliser 140 (the fourth adjustable stabiliser is not visible in Figure 1, but is shown in Figure 2). The first, second, third and fourth adjustable stabilisers 110, 120, 130 and 140 are configured to support the work machine 100 when a distal end of each adjustable stabiliser is in contact with a ground surface. In the example shown in Figure 1, the distal end of each of the first, second, third and fourth adjustable stabilisers 110, 120, 130 and 140 comprises a first, second, third and fourth plate 111, 121, 131 and 141 respectively. The distal end of each of the first, second, third and fourth adjustable stabilisers 110, 120, 130 and 140 may comprise other geometries.

The first, second, third and fourth adjustable stabilisers 110, 120, 130 and 140 are each extendable between a minimum extension and a maximum extension, wherein a difference in length between the minimum extension and the maximum extension is the same for each adjustable stabiliser.

A first stabiliser pair may comprise any two of the first, second, third and fourth adjustable stabilisers 110, 120, 130 and 140. A second stabiliser pair may comprise any two of the first, second, third and fourth adjustable stabilisers 110, 120, 130 and 140, wherein one (but not both) of the stabilisers of the second stabiliser pair is the same as one of the stabilisers of the first stabiliser pair. In an embodiment the first stabiliser pair may comprise the first adjustable stabiliser 110 and the second adjustable stabiliser 120, and the second stabiliser pair may comprise the second adjustable stabiliser 120 and the third adjustable stabiliser 130.

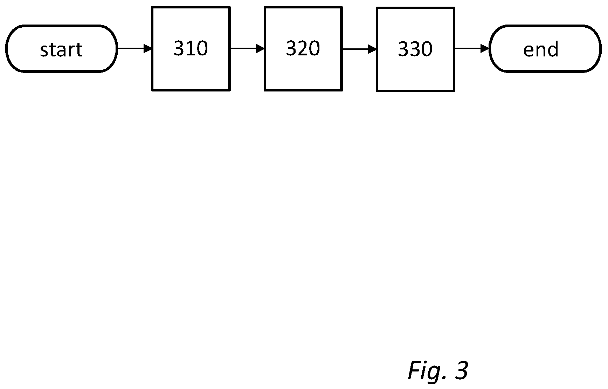

With reference to Figure 3, a method of adjusting a first plane of a work machine 100 according to an embodiment of the present disclosure is illustrated. The device for adjusting the first plane of the work machine 100 may be configured to carry out any of the methods described herein.

At step 310, the first, second, third and fourth adjustable stabilisers 110, 120, 130 and 140 are extended to a first configuration. **In** the first configuration each adjustable stabiliser is at a calibration extension and the first plane is parallel to a reference plane defined by points of contact of the distal ends of the first, second, third and fourth adjustable stabilisers with the ground surface. **In** an embodiment, the calibration extension may comprise between 80 and 95 % of the maximum extension, or more preferably between 85 and 90 % of the maximum extension. The calibration extension may comprise other percentages of the maximum extension.

At step 320 the first stabiliser pair is adjusted such that the first, second, third and fourth adjustable stabilisers arrive at a second configuration. In the second configuration either the tilt sensor indicates that the first plane is parallel to a first axis of a target plane; or the first adjustable stabiliser and second adjustable stabiliser have reached the maximum extension. The first and second adjustable stabilisers may be extended from the calibration extension until either the first plane is parallel to the first axis, or until the first and second stabilisers have reached their maximum extension. The first and second stabilisers may be extended simultaneously and at the same rate.

At step 330 the second stabiliser pair is adjusted such that the first, second, third and fourth adjustable stabilisers arrive at a third configuration. In the third configuration either the tilt sensor indicates that the first plane is parallel to a second axis of the target plane; or the second adjustable stabiliser and the third adjustable stabiliser have reached maximum extension. The second and third adjustable stabilisers may be extended from the calibration extension until either the first plane is parallel to the second axis, or until the second and third stabilisers have reached their maximum extension. The second and third stabilisers may be extended simultaneously and at the same rate.

The work machine 100 may further comprise a first wheel assembly 151, a second wheel assembly 152, a third wheel assembly 153 and a fourth wheel assembly 154. The first, second, third and fourth wheel assemblies 151, 152, 153 and 154 may be configured to support the work machine 100. In an embodiment, the first, second, third and fourth wheel assemblies 151, 152, 153 and 154 may be configured to support the work machine 100 when the first, second, third and fourth adjustable stabilisers 110, 120, 130 and 140 are not in use or are extended to an extension below a threshold extension. The calibration extension of the first, second, third and fourth adjustable stabilisers 110, 120, 130 and 140 may comprise an extension at which the work machine 100 is supported by the first, second, third and fourth adjustable stabilisers 110, 120, 130 and 140 and not by any of the first, second, third and fourth wheel assemblies 151, 152, 153 and 154.

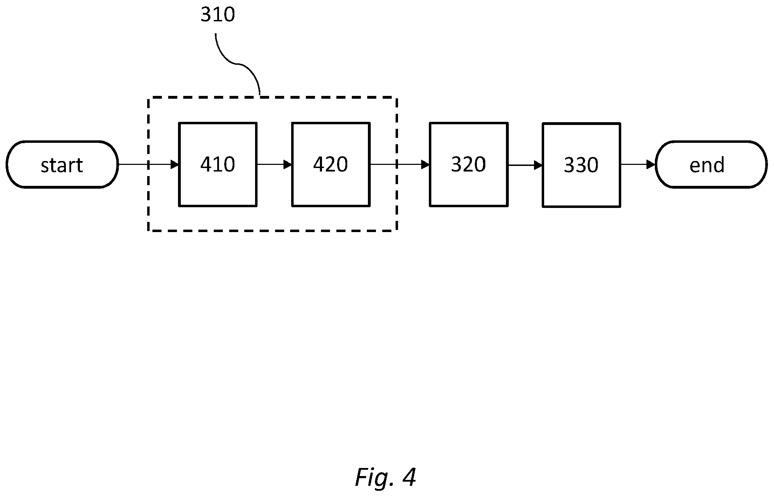

In an embodiment, with reference to Figure 4, step 310 of adjusting the first, second, third and fourth adjustable stabilisers 110, 120, 130 and 140 are extended to a first configuration may comprise a first stage 410 and a second stage 420. The first stage 410 may comprise extending the first, second, third and fourth adjustable stabilisers 110, 120, 130 and 140 to a primary configuration. In the primary configuration each adjustable stabiliser is at the maximum extension and the first plane is parallel to a reference plane defined by points of contact of the distal ends of the first, second, third and fourth adjustable stabilisers 110, 120, 130 and 140 with the ground surface. The second stage 420 may comprise retracting the first, second, third and fourth adjustable stabilisers 110, 120, 130 and 140 to the first configuration. As described earlier, in the first configuration each adjustable stabiliser is at a calibration extension and the first plane is parallel to a reference plane defined by points of contact of the distal ends of the first, second, third and fourth adjustable stabilisers with the ground surface. The second stage 420 may comprise retracting the stabilisers by a percentage of a stroke or of the maximum extension, for example a percentage between 5 and 20 % of a stroke or of the maximum extension, or more preferably between 10 and 15 % of a stroke or of the maximum extension. The second stage 420 may comprise retracting the stabilisers for a pre-determined amount of time, for example for a pre-determined time that is between 0.5 to 2 seconds.

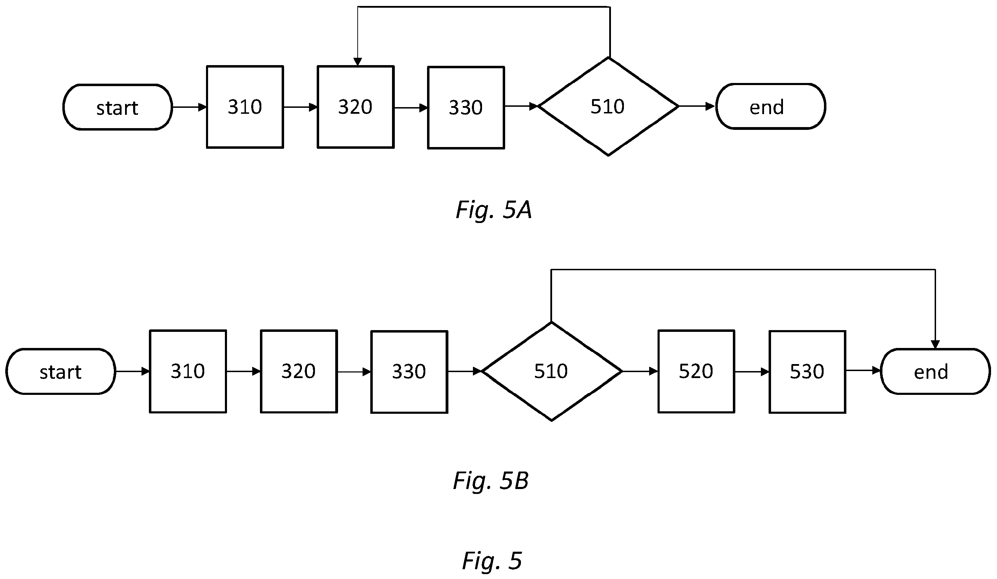

With reference to Figure 5, the methods illustrated in either Figure 3 or Figure 4 may further comprise a step 510 of using the tilt sensor to determine whether the first plane is parallel to the target plane. In an event that the tilt sensor indicates that the first plane is parallel to the target plane, the method ends. In an event that the tilt sensor indicates that the first plane is not parallel to the target plane, the method may comprise further adjusting the first stabiliser pair and the second stabiliser pair. In an embodiment, with reference to Figure 5A, in an event that the tilt sensor indicates that the first plane is not parallel to the target plane, the method may repeat steps 320 and 330. The method may then proceed (for example the method may end), or step 510 of using the tilt sensor to determine whether the first plane is parallel to the target plane may be carried out again, and in an event that the tilt sensor indicates that the first plane is not parallel to the target plane the method may repeat steps 320 and 330 again. In an embodiment, with reference to Figure 5B, in an event that the tilt sensor indicates that the first plane is not parallel to the target plane, the method may further comprise steps 520 and 530. Step 520 may comprise adjusting the first stabiliser pair such that the first, second, third and fourth adjustable stabilisers 110, 120, 130 and 140 arrive at a fourth configuration. In the fourth configuration either the tilt sensor may indicate that the first plane is parallel to the first axis; or the first adjustable stabiliser and the second adjustable stabiliser may have reached the calibration or maximum extension. In the fourth configuration, the first and second adjustable stabilisers 110, 120 may be between the calibration extension and the maximum extension or may be at the calibration extension or at the maximum extension. Step 530 may comprise adjusting the second stabiliser pair such that the first, second, third and fourth adjustable stabilisers 110, 120, 130 and 140 arrive at a fifth configuration. In the fifth configuration either the tilt sensor may indicate that the first plane is parallel to the second axis; or the second adjustable stabiliser and the third adjustable stabiliser may have reached the minimum calibration or maximum extension. In the fifth configuration the second and third adjustable stabilisers may be between the calibration extension and the maximum extension or may be at the calibration extension or at the maximum extension. Steps 520 and 530 may comprise adjusting the first, second, third and fourth adjustable stabilisers by extending the first, second, third and fourth adjustable stabilisers and/or retracting the first, second, third and fourth adjustable stabilisers.

The methods described above may further comprise a step after the last step (e.g. after step 330 of Figures 3 or 4, or after step 510 of Figure 5A or after step 530 of Figure 5B) of using the tilt sensor to determine whether the first plane is parallel to the first axis and the second axis. In an event that the first tilt sensor indicates that the first plane is parallel to the first and second axes, the method may end. In an event that the first tilt sensor indicates that the first plane is not parallel to the first and second axes, the method may further comprise extending the first stabiliser pair and the second stabiliser pair to the maximum extension.

In the methods described above, determining whether the first plane is parallel to the first axis or the second axis may comprise comparing a tilt angle to a threshold angle. In an embodiment, the threshold angle may comprise a pre-determined threshold angle. In another embodiment, the threshold angle may comprise a tolerance of the tilt sensor. In an embodiment, the threshold angle may comprise ±0.01°, ±0.05°,±0.1°, ±0.5°, ±1° or another angle.

In an embodiment, a user may select a levelling mode from a pre-determined list of levelling modes, wherein each levelling mode is configured to carry out the method for adjusting the first plane. Each levelling mode may comprise a threshold angle. For example, the user may choose between a "quick levelling mode" and a "fine levelling mode", wherein the threshold angle is smaller for the "fine levelling mode" than the "quick levelling mode". The method for adjusting the first plane may be completed in a shorter time for the quick levelling mode than the fine levelling mode. The method for adjusting the first plane may adjust the first plane to be closer to parallel to the target plane for the fine levelling mode than the quick levelling mode. The user may therefore choose whether they require the first plane to be adjusted more quickly, or more accurately. In an event that the user selects the fine levelling mode, and levelling is not achieved (i.e. at the end of the method the first plane is not parallel to the target plane to within the threshold angle, so the adjustable stabilisers are extended to maximum extension), it would be possible for the user to then select the quick levelling mode. In this way, the first plane may be brought closer to parallel to the target plane than if all adjustable stabilisers are adjusted to their maximum extension to bring the first plane parallel to the reference plane. Alternatively, in an embodiment this may be carried out automatically: the method may be carried out a first time with a first threshold angle, and in an event that after the last step the first plane is not parallel to the target plane (to within the first threshold angle), the method may be carried out a second time with a second threshold angle. The second threshold angle may be larger than the first threshold angle.

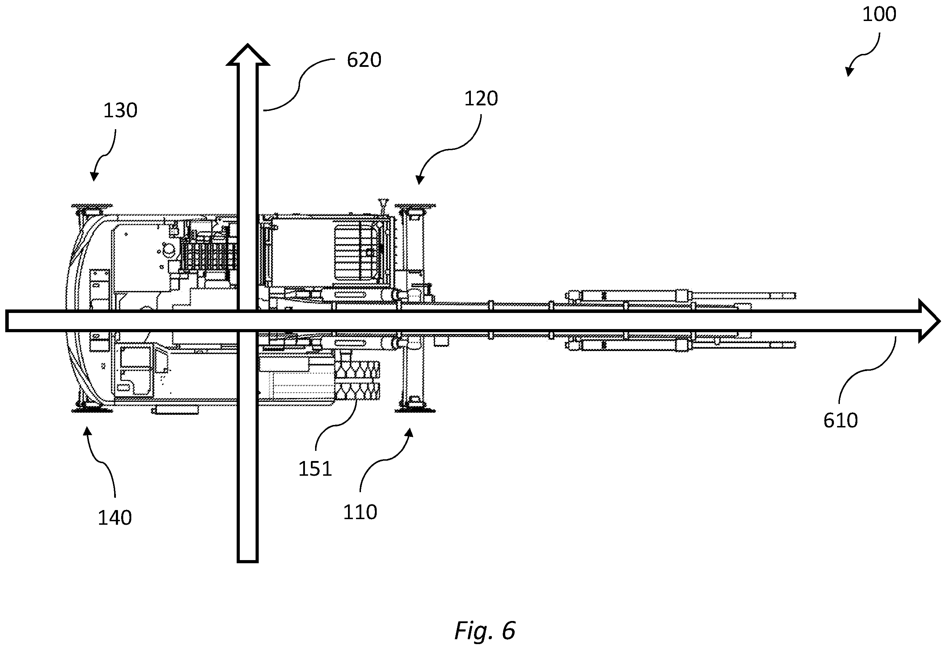

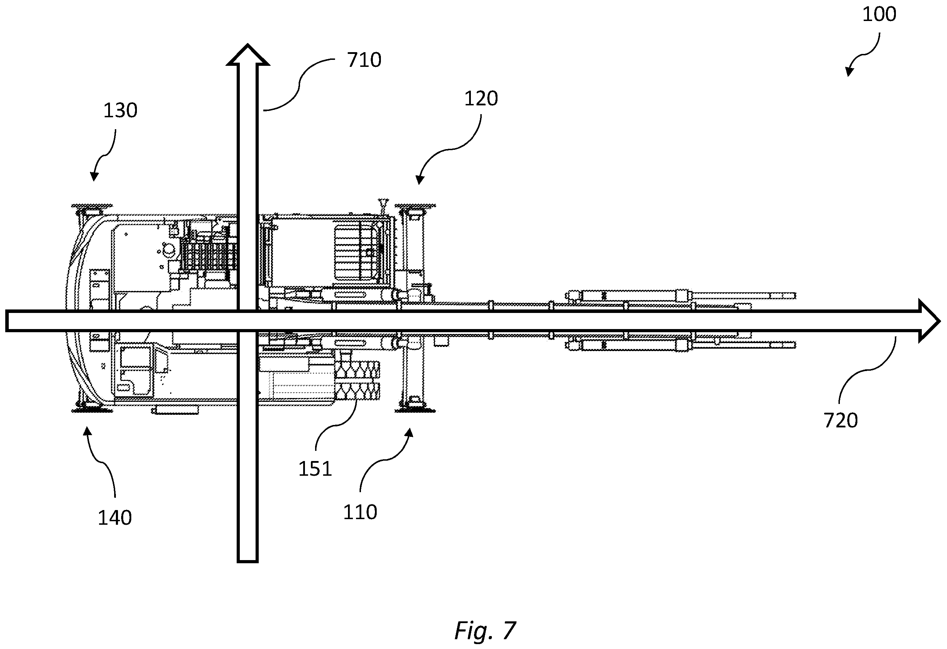

Examples of the first axis and second axis are shown in Figures 6 and 7 for the work machine of Figures 1 and 2. Figure 6 shows the first axis, indicated by arrow 610, parallel to the length of the work machine 100 (i.e. the first axis comprises a front-back axis). The second axis is indicated by arrow 620 and is perpendicular to the first axis 610 (i.e. the second axis comprises a side-side axis). In an embodiment, the first stabiliser pair may comprise the first adjustable stabiliser 110 and the second adjustable stabiliser 120, and the second stabiliser pair may comprise the second adjustable stabiliser 120 and the third adjustable stabiliser 130. The first axis may be illustrated by the arrow 610, and the second axis may be illustrated by the arrow 620. Step 320 may comprise adjusting the first stabiliser pair such that the first, second, third and fourth adjustable stabilisers arrive at a second configuration. In the second configuration either the tilt sensor indicates that the first plane is parallel to the first axis 610 of a target plane; or the first adjustable stabiliser 110 and the second adjustable stabiliser 120 have reached the maximum extension. Step 330 may comprise adjusting the second stabiliser pair such that the first, second, third and fourth adjustable stabilisers arrive at a third configuration. In the third configuration either the tilt sensor indicates that the first plane is parallel to the second axis 620 of a target plane; or the second adjustable stabiliser 120 and the third adjustable stabiliser 130 have reached the maximum extension. In this way the stabilisers are adjusted first to level the front of the work machine 100 with respect to the back of the work machine 100 by adjusting the front stabilisers (the first adjustable stabiliser 110 and the second adjustable stabiliser 120). The stabilisers are adjusted second to level a side of the work machine 100 with respect to the other side by adjusting the stabilisers on one side of the work machine 100 (the second adjustable stabiliser 120 and the third adjustable stabiliser 130).

Figure 7 shows the first axis, indicated by arrow 710, perpendicular to the length of the work machine 100 (i.e. the first axis comprises a side-side axis). The second axis is indicated by arrow 720 and is parallel to the length of the work machine (i.e. the second axis comprises a front-back axis). In an embodiment the first stabiliser pair may comprise the second adjustable stabiliser 120 and the third adjustable stabiliser 130, and the second stabiliser pair may comprise the first adjustable stabiliser 110 and the second adjustable stabiliser 120. The first axis may be illustrated by the arrow 710, and the second axis may be illustrated by the arrow 720. Step 320 may comprise adjusting the first stabiliser pair such that the first, second, third and fourth adjustable stabilisers arrive at a second configuration. In the second configuration either the tilt sensor indicates that the first plane is parallel to the first axis 710 of a target plane; or the second adjustable stabiliser 120 and the third adjustable stabiliser 130 have reached the maximum extension. Step 330 may comprise adjusting the second stabiliser pair such that the first, second, third and fourth adjustable stabilisers arrive at a third configuration. In the third configuration either the tilt sensor indicates that the first plane is parallel to the second axis 720 of a target plane; or the first adjustable stabiliser 110 and the second adjustable stabiliser 120 have reached the maximum extension. In this way the stabilisers are adjusted first to level a side of the work machine 100 with respect to the other side by adjusting the stabilisers on one side of the work machine 100 (the second adjustable stabiliser 120 and the third adjustable stabiliser 13). The stabilisers are adjusted second to level the front of the work machine 100 with respect to the back of the work machine 100 by adjusting the front stabilisers (the first adjustable stabiliser 110 and the second adjustable stabiliser 120).

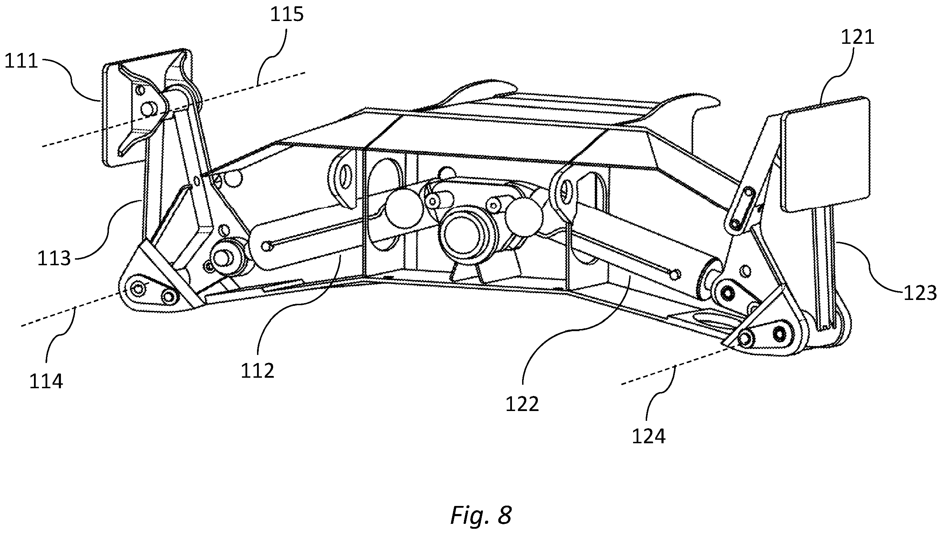

In an embodiment, each of the first, second, third and fourth adjustable stabilizers 110, 120, 130 and 140 may comprise a hydraulic cylinder configured to be extendable; and
a support plate configured to engage with the ground (wherein the distal end of each stabiliser comprises the support plate). Each of the first, second, third and fourth adjustable stabilizers 110, 120, 130 and 140 may further comprise a mechanical arm, wherein each of the first, second, third and fourth adjustable stabilizers are stored in a raised position and wherein the mechanical arm configured to lower each stabilizer to a lowered position prior to step a). With reference to Figure 8, the first adjustable stabiliser 110 and the second adjustable stabiliser 120 are shown according to an embodiment of the present disclosure. The first adjustable stabiliser 110 and second adjustable stabiliser 120 may each comprise a support plate 111 and 121, a hydraulic cylinder 112 and 122, and a mechanical arm 113 and 123. The mechanical arms 113 and 123 may be raised and lowered (for example about axes 114 and 124). The first adjustable stabiliser 110 and second adjustable stabiliser 120 are shown in a raised position in Figure 8, and in a lowered position in Figure 1. In an embodiment, the support plates 111 and 121 may be configured to be rotatable to enable better contact with the ground. For example, the support plates 111 and 121 may be configured to be rotatable in a plane parallel to the mechanical arms 113 and 123 (in Figure 8, support plate 111 is rotatable about an axis 115) or in a plane parallel to the vertical. The hydraulic cylinders 112 and 122 may be at an angle to the ground, such that the extension and retraction of the adjustable stabilisers is at an angle to the ground.

Referring back to Figures 1 and 2, the work machine 100 may further comprise a chassis or machine body configured to be supported by the first, second, third and fourth adjustable stabilisers 110, 120, 130 and 140. The chassis may, for example, comprise a cab and a work tool. In an embodiment, the chassis may comprise an undercarriage and an upper carriage. In the example shown in Figures 1 and 2, the work machine 100 comprises an undercarriage 160 and an upper carriage or cab 170. The work machine may further comprise a work tool 180 comprising an arm, shown in an extended position in Figure 2.

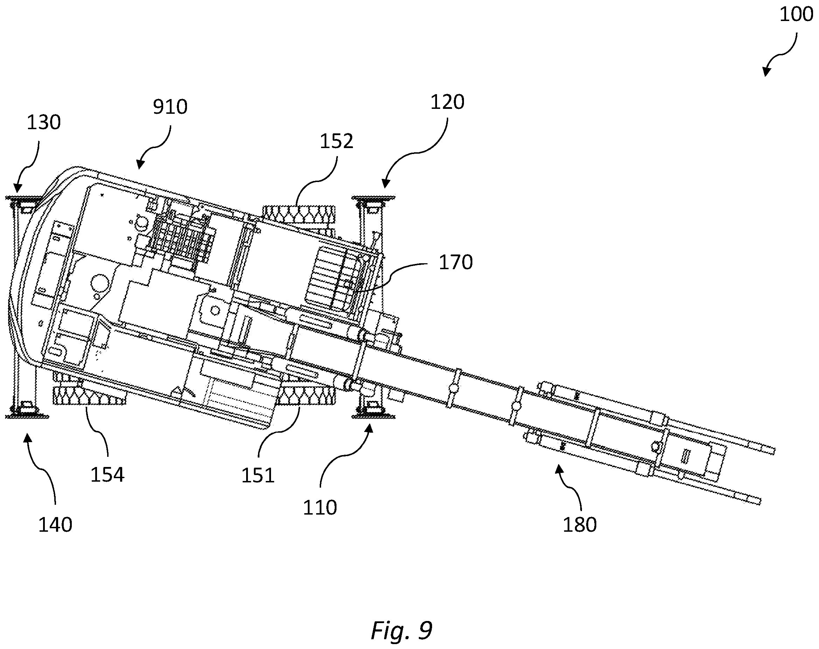

In an embodiment wherein the chassis comprises an undercarriage and an upper carriage, the upper carriage may be configured to be movable relative to the undercarriage. In an embodiment, the upper carriage may be configured to be rotatable about a third axis relative to the undercarriage, wherein the third axis is perpendicular to the first axis and to the second axis. Figure 9 shows an example of a work machine having an upper carriage 910 (comprising a cab 170 and a work tool 180) rotated with respect to the undercarriage (comprising a frame, the first, second, third and fourth adjustable stabilisers 110, 120, 130 and 140, and the first, second, third and fourth wheel assemblies 151, 152, 153 and 154).

In an embodiment, the upper carriage may comprise the tilt sensor and the under carriage may comprise the first plane. The upper carriage may be configured to be rotatable about a third axis with respect to the under carriage, wherein the third axis is perpendicular to the first axis and the second axis. The method steps of using the tilt sensor to determine whether the first plane is parallel to the target plane may further comprise using a rotation angle of the upper carriage with respect to the under carriage to determine whether the first plane is parallel to the first axis or the second axis. In other words, the rotation of the upper carriage with respect to the undercarriage may be compensated for when determining whether the first plane is parallel to the first axis or the second axis. The rotation angle may be measured by the tilt sensor or by an additional swing sensor.

The tilt sensor may be configured to detect tilt about a primary axis and about a secondary axis. In an embodiment, the tilt sensor may comprise one tilt sensor capable of detecting tilt about both the primary and the secondary axes. In another embodiment, the tilt sensor may comprise a first tilt sensor and a second tilt sensor, wherein the first tilt sensor is configured to detect tilt about a primary axis and wherein the second tilt sensor is configured to detect tilt about a secondary axis. In an embodiment where the upper carriage is not rotatable with respect to the under carriage, the primary axis may be parallel to the first axis and the secondary axis may be parallel to the second axis. In an embodiment where the upper carriage is rotatable with respect to the under carriage, the angles of the primary axis with respect to the first axis and the secondary axis with respect to the second axis may be determined and used to determine whether the first plane is parallel to the first axis or the second axis.

In use, when the work machine 100 is travelling, the first, second, third and fourth stabilisers 110, 120, 130 and 140 may be raised and the work machine may be supported by the first, second, third and fourth wheel assemblies 151, 152, 153 and 154. When the work machine 100 is stationary, the first, second, third and fourth stabilisers 110, 120, 130 and 140 may be lowered to support the work machine 100, providing a more stable support for the work machine 100 (for example by providing a wider base than the first, second, third and fourth wheel assemblies 151, 152, 153 and 154 and by avoiding damping effects of the wheel assemblies supporting the work machine 100).

The first plane may be a plane of the work machine that is parallel to the ground when the work machine is supported by the first, second, third and fourth wheel assemblies 151, 152, 153 and 154. The first plane may be horizontal when the work machine is supported by the first, second, third and fourth wheel assemblies 151, 152, 153 and 154 on a horizontal surface. In other words, the first plane may be parallel to a wheel plane comprising the contact point of each wheel assembly with the ground when the work machine is supported by the first, second, third and fourth wheel assemblies 151, 152, 153 and 154. The first plane may also be parallel to a plane comprising the distal end of each adjustable stabiliser when the adjustable stabilisers are extended by the same amount.

The methods of adjusting the first plane of the work machine 100 described above aim to adjust the first plane of the work machine 100 to be close to the horizontal even when the supporting ground is not horizontal. A maximum slope compensation achievable may be dictated more by the geometry of the machine (including the wheel assemblies and the adjustable stabilisers) than by the steps of the method per se. Nevertheless, in an embodiment, the method may compensate for up to 4° of slope of the supporting ground, or between 1.5° and 3° of slope of the supporting ground, or up to a larger angle of slope In addition, when the work machine 100 is supported by the stabilisers, the stability of the work machine 100 is improved if the first, second, third and fourth adjustable stabilisers 110, 120, 130 and 140 support the work machine 100 and the first, second, third and fourth wheel assemblies 151, 152, 153 and 154 are not providing support. The calibration extension may be an extension of the adjustable stabilisers at which the work machine 100 may be supported by the first, second, third and fourth adjustable stabilisers 110, 120, 130 and 140 and not by any of the first, second, third and fourth wheel assemblies 151, 152, 153 and 154. Any extension that is greater than the calibration extension (i.e. between the calibration extension and maximum extension, or the maximum extension) may therefore be an extension of the adjustable stabilisers at which the work machine 100 may be supported by the first, second, third and fourth adjustable stabilisers 110, 120, 130 and 140 and not by any of the first, second, third and fourth wheel assemblies 151, 152, 153 and 154. The methods described above start by adjusting the adjustable stabilisers to the calibration extension, and then keep the adjustable stabilisers either at the calibration extension or at extensions greater than the calibration extension. In more detail, Step 310 of the methods described above comprises adjusting the first, second, third and fourth adjustable stabilisers 110, 120, 130 and 140 to the first configuration (wherein each adjustable stabiliser is at a calibration extension). With the first, second, third and fourth adjustable stabilisers 110, 120, 130 and 140 in the first configuration, the work machine 100 may be supported by the first, second, third and fourth adjustable stabilisers 110, 120, 130 and 140 and not by any of the first, second, third and fourth wheel assemblies 151, 152, 153 and 154. In the first configuration, each of the first, second, third and fourth adjustable stabilisers 110, 120, 130 and 140 are at a calibration extension. In any of the subsequent method steps (for example steps 320, 330, 520 or 530), the adjustable stabilisers may be kept between the calibration extension and the maximum extension or may be at the calibration or maximum extension. Steps 320 and 330 may comprise extending the adjustable stabilisers (and not retracting the adjustable stabilisers) so that the work machine 100 is still supported by the first, second, third and fourth adjustable stabilisers 110, 120, 130 and 140 and not by any of the first, second, third and fourth wheel assemblies 151, 152, 153 and 154. Steps 520 and 530 may adjust the stabilisers between the calibration extension and the maximum extension, so that the work machine 100 is still supported by the first, second, third and fourth adjustable stabilisers 110, 120, 130 and 140 and not by any of the first, second, third and fourth wheel assemblies 151, 152, 153 and 154. In an event that the first plane is not parallel to the target plane after steps 320 and 330 (or steps 520 and 530), the stabilisers are extended to maximum extension to maximise the probability that the work machine 100 is supported by the first, second, third and fourth adjustable stabilisers 110, 120, 130 and 140 and not by any of the first, second, third and fourth wheel assemblies 151, 152, 153 and 154.

In an embodiment, the extension of each adjustable stabiliser may be determined by a pressure sensor, wherein the pressure sensor is configured to detect a pressure of the hydraulic cylinder. In an embodiment, the pressure of the hydraulic cylinder may rise as the extension of the hydraulic cylinder increases. A maximum pressure may correspond to a maximum extension of the hydraulic cylinder (and therefore a maximum extension of the adjustable stabiliser).

In an embodiment, the upper carriage may be configured to move rotationally and vertically with respect to the undercarriage. For example, an arm 190 (labelled in Figure 1) may be used to raise and lower the upper carriage.

In use, an operator may initiate the methods described above via a user interface in the cab 170.

An example of a method of adjusting the first plane of the work machine 100 is illustrated in Figures 10 to 16 with arrows indicating which stabilisers are adjusted in each step. An arrow pointing away from the work machine indicates that the stabiliser may be extended; an arrow pointing towards the work machine indicates that the stabiliser may be retracted, and a double-ended arrow indicates that the stabiliser may be extended or retracted. The first stabiliser pair in this example comprises the second adjustable stabiliser 120 and the third adjustable stabiliser 130. The second stabiliser pair in this example comprises the first adjustable stabiliser 110 and the second adjustable stabiliser 120. Figure 10 shows step 410, in which the first, second, third and fourth adjustable stabilisers 110, 120, 130 and 140 are extended to maximum extension. Figure 11 shows step 420, in which the first, second, third and fourth adjustable stabilisers 110, 120, 130 and 140 are retracted to arrive at the first configuration. Figure 12 shows step 320, wherein the first stabiliser pair is adjusted by extending the second adjustable stabiliser 120 and the third adjustable stabiliser 130 such that the first, second, third and fourth adjustable stabilisers arrive at a second configuration. In the second configuration either the tilt sensor indicates that the first plane is parallel to a first axis of a target plane; or the first adjustable stabiliser and the second adjustable stabiliser have reached the maximum extension. Figure 13 shows step 330, wherein the second stabiliser pair is adjusted by extending the first adjustable stabiliser 110 and the second adjustable stabiliser 120 such that the first, second, third and fourth adjustable stabilisers arrive at a third configuration. In the third configuration either the tilt sensor indicates that the first plane is parallel to a second axis of the target plane; or the second adjustable stabiliser and the third adjustable stabiliser have reached maximum extension.

In an embodiment, the method may end after step 330. In another embodiment, the method may further comprise step 510 of determining whether the first plane is parallel to the target plane.

Figure 14 shows step 520, wherein if at step 510 the first plane is not parallel to the target plane, the first stabiliser pair is adjusted (by either extending or retracting the second adjustable stabiliser 120 and the third adjustable stabiliser 130) such that the first, second, third and fourth adjustable stabilisers arrive at a fourth configuration. In the fourth configuration either the tilt sensor indicates that the first plane is parallel to a first axis of a target plane; or the first adjustable stabiliser and the second adjustable stabiliser have reached the calibration or maximum extension. As described above, in the fourth configuration the first adjustable stabiliser and the second adjustable stabiliser may be between the calibration extension and the maximum extension or may be at the calibration extension or at the maximum extension. Figure 15 shows step 530, wherein the second stabiliser pair is adjusted (by extending or retracting the first adjustable stabiliser 110 and the second adjustable stabiliser 120) such that the first, second, third and fourth adjustable stabilisers arrive at a fifth configuration. In the fifth configuration either the tilt sensor indicates that the first plane is parallel to a second axis of the target plane; or the second adjustable stabiliser and the third adjustable stabiliser have reached the calibration or maximum extension. As described above, in the fifth configuration the second adjustable stabiliser and the third adjustable stabiliser may be between the calibration extension and the maximum extension or may be at the calibration extension or at the maximum extension.

In an embodiment, the method may comprise a last step (either after step 330 or 530) of determining whether the first plane is parallel to the target plane. In an event that first plane is not parallel to the target plane, the first, second, third and fourth adjustable stabilisers 110, 120, 130 and 140 may be extended to maximum extension (shown in Figure 16).

## Claims

1. A method of adjusting a first plane of a work machine (100), wherein the work machine comprises a first adjustable stabiliser (110), a second adjustable stabiliser (120), a third adjustable stabiliser (130), a fourth adjustable stabiliser (140) and a tilt sensor, wherein:
the first, second, third and fourth adjustable stabilisers (110, 120, 130, 140) are each extendable between a minimum extension and a maximum extension, wherein a difference in length between the minimum extension and the maximum extension is the same for each adjustable stabiliser;
the first, second, third and fourth adjustable stabilisers (110, 120, 130, 140) are configured to support the work machine when a distal end of each adjustable stabiliser is in contact with a ground surface;
a first stabiliser pair comprises the first adjustable stabiliser (110) and the second adjustable stabiliser (120); and
a second stabiliser pair comprises the second adjustable stabiliser (120) and the third adjustable stabiliser (130);
the method comprising:
a. extending the first, second, third and fourth adjustable stabilisers (110, 120, 130, 140) to a first configuration, wherein in the first configuration each adjustable stabiliser is at a calibration extension and the first plane is parallel to a reference plane defined by points of contact of the distal ends of the first, second, third and fourth adjustable stabilisers (110, 120, 130, 140) with the ground surface;
b. adjusting the first stabiliser pair such that the first, second, third and fourth adjustable stabilisers (110, 120, 130, 140) arrive at a second configuration, wherein in the second configuration:
either the tilt sensor indicates that the first plane is parallel to a first axis of a target plane; or
the first adjustable stabiliser (110) and the second adjustable stabiliser (120) have reached the maximum extension;
c. adjusting the second stabiliser pair such that the first, second, third and fourth adjustable stabilisers (110, 120, 130, 140) arrive at a third configuration, wherein in the third configuration:
either the tilt sensor indicates that the first plane is parallel to a second axis of the target plane; or
the second adjustable stabiliser (120) and the third adjustable stabiliser (130) have reached maximum extension.

2. The method of claim 1 wherein step a) comprises a first stage and a second stage, wherein:
the first stage comprises extending the first, second, third and fourth adjustable stabilisers (110, 120, 130, 140) to a primary configuration, wherein in the primary configuration each adjustable stabiliser is at the maximum extension and the first plane is parallel to a reference plane defined by points of contact of the distal ends of the first, second, third and fourth adjustable stabilisers (110, 120, 130, 140) with the ground surface; and
the second stage comprises retracting the first, second, third and fourth adjustable stabilisers (110, 120, 130, 140) to the first configuration.

3. The method of claim 1 or 2 further comprising a step after step c) of using the tilt sensor to determine whether the first plane is parallel to the target plane, and in an event that the tilt sensor indicates that the first plane is not parallel to the target plane:
d. adjusting the first stabiliser pair such that the first, second, third and fourth adjustable stabilisers (110, 120, 130, 140) arrive at a fourth configuration, wherein in the fourth configuration:
either the tilt sensor indicates that the first plane is parallel to the first axis; or
the first adjustable stabiliser (110) and the second adjustable stabiliser (120) have reached the calibration or maximum extension; and
e. adjusting the second stabiliser pair such that the first, second, third and fourth adjustable stabilisers (110, 120, 130, 140) arrive at a fifth configuration, wherein in the fifth configuration:
either the tilt sensor indicates that the first plane is parallel to the second axis; or
the first adjustable stabiliser (110) and the second adjustable stabiliser (120) have reached the calibration or maximum extension.

4. The method of any preceding claim further comprising a step after step c) or e) of using the tilt sensor to determine whether the first plane is parallel to the first axis and the second axis and in an event that the first tilt sensor indicates that the first plane is not parallel to the first and second axes, extending the first stabiliser pair and the second stabiliser pair to the maximum extension.

5. The method of any of claims 1 to 4 wherein the first, second, third and fourth adjustable stabilizers each comprise:
a hydraulic cylinder configured to be extendable; and
a support plate configured to engage with the ground.

6. The method of claim 5 wherein the first, second, third and fourth adjustable stabilizers each further comprise a mechanical arm, wherein each of the first, second, third and fourth adjustable stabilizers (110, 120, 130, 140) are stored in a raised position and wherein the mechanical arm configured to lower each stabilizer to a lowered position prior to step a).

7. The method of any preceding claim wherein determining whether the first plane is parallel to the first axis or the second axis comprises comparing a tilt angle to a threshold angle.

8. The method of claim 7 wherein the threshold angle comprises a tolerance of the tilt sensor.

9. The method of any preceding claim wherein the work machine (100) comprises an upper carriage comprising the tilt sensor and an under carriage comprising the first plane, wherein:
the upper carriage is configured to be rotatable about a third axis with respect to the under carriage;
the third axis is perpendicular to the first axis and the second axis; and
the method steps of using the tilt sensor to determine whether the first plane is parallel to the target plane further comprise using a rotation angle of the upper carriage with respect to the under carriage to determine whether the first plane is parallel to the first axis or the second axis.

10. The method of any preceding claim wherein the tilt sensor comprises a first tilt sensor and a second tilt sensor, wherein the first tilt sensor is configured to detect tilt about a primary axis and wherein the second tilt sensor is configured to detect tilt about a secondary axis.

11. The method of any of claims 4 to 10 wherein the work machine (100) further comprises a pressure sensor configured to detect a pressure of the hydraulic cylinder of each adjustable stabiliser, wherein an extension of each adjustable stabiliser is determined by using the pressure sensor.

12. A device for adjusting a first plane of a work machine (100), wherein the device comprises:
a first adjustable stabiliser (110), a second adjustable stabiliser (120), a third adjustable stabiliser (130) and a fourth adjustable stabiliser (140), wherein:
the first, second, third and fourth adjustable stabilisers (110, 120, 130, 140) are each extendable between a minimum extension and a maximum extension, wherein a difference in length between the minimum extension and the maximum extension is the same for each adjustable stabiliser;
the first, second, third and fourth adjustable stabilisers (110, 120, 130, 140) are configured to support the work machine when a distal end of each adjustable stabiliser is in contact with a ground surface;
a first stabiliser pair comprises the first adjustable stabiliser (110) and the second adjustable stabiliser (120); and
a second stabiliser pair comprises the second adjustable stabiliser (120) and the third adjustable stabiliser (130);
a tilt sensor; and
a controller configured to:
a. extend the first, second, third and fourth adjustable stabilisers (110, 120, 130, 140) to a first configuration, wherein in the first configuration each adjustable stabiliser is at a calibration extension and the first plane is parallel to a reference plane defined by points of contact of the distal ends of the first, second, third and fourth adjustable stabilisers (110, 120, 130, 140) with the ground surface;
b. adjust the first stabiliser pair such that the first, second, third and fourth adjustable stabilisers (110, 120, 130, 140) arrive at a second configuration, wherein in the second configuration:
either the tilt sensor indicates that the first plane is parallel to a first axis of a target plane; or
the first adjustable stabiliser (110) and the second adjustable stabiliser (120 have reached the maximum extension;
c. adjust the second stabiliser pair such that the first, second, third and fourth adjustable stabilisers (110, 120, 130, 140) arrive at a third configuration, wherein in the third configuration:
either the tilt sensor indicates that the first plane is parallel to a second axis of the target plane; or
the second adjustable stabiliser (120) and the third adjustable stabiliser (130) have reached maximum extension.

13. The device of claim 12 wherein step a) comprises a first stage and a second stage, wherein:
the first stage comprises extending the first, second, third and fourth adjustable stabilisers (110, 120, 130, 140) to a primary configuration, wherein in the primary configuration each adjustable stabiliser is at the maximum extension and the first plane is parallel to a reference plane defined by points of contact of the distal ends of the first, second, third and fourth adjustable stabilisers (110, 120, 130, 140) with the ground surface; and
the second stage comprises retracting the first, second, third and fourth adjustable stabilisers (110, 120, 130, 140) to the first configuration.

14. The device of claim 12 or 13 wherein after step c) the controller is further configured to use the tilt sensor to determine whether the first plane is parallel to the target plane, and in an event that the tilt sensor indicates that the first plane is not parallel to the target plane the controller is configured to:
d. adjust the first stabiliser pair such that the first, second, third and fourth adjustable stabilisers (110, 120, 130, 140) arrive at a fourth configuration, wherein in the fourth configuration:
either the tilt sensor indicates that the first plane is parallel to the first axis; or
the first adjustable stabiliser (110) and the second adjustable stabiliser (120) have reached the calibration or maximum extension; and
e. adjust the second stabiliser pair such that the first, second, third and fourth adjustable stabilisers (110, 120, 130, 140) arrive at a fifth configuration, wherein in the fifth configuration:
either the tilt sensor indicates that the first plane is parallel to the second axis; or
the first adjustable stabiliser (110) and the second adjustable stabiliser (120) have reached the calibration or maximum extension.

15. A work machine comprising the device of any of claims 12 to 14.

## Patentansprüche

1. Verfahren zum Einstellen einer ersten Ebene einer Arbeitsmaschine (100), wobei die Arbeitsmaschine einen ersten einstellbaren Stabilisator (110), einen zweiten einstellbaren Stabilisator (120), einen dritten einstellbaren Stabilisator (130), einen vierten einstellbaren Stabilisator (140) und einen Neigungssensor umfasst, wobei:
der erste, der zweite, der dritte und der vierte einstellbare Stabilisator (110, 120, 130, 140) jeweils zwischen einer minimalen Erweiterung und einer maximalen Erweiterung erweiterbar sind, wobei ein Längenunterschied zwischen der minimalen Erweiterung und der maximalen Erweiterung für jeden einstellbaren Stabilisator gleich ist;
der erste, der zweite, der dritte und der vierte einstellbare Stabilisator (110, 120, 130, 140) konfiguriert sind, um die Arbeitsmaschine zu stützen, wenn ein distales Ende jedes einstellbaren Stabilisators in Kontakt mit einer Bodenoberfläche ist;
ein erstes Stabilisatorpaar den ersten einstellbaren Stabilisator (110) und den zweiten einstellbaren Stabilisator (120) umfasst; und
ein zweites Stabilisatorpaar den zweiten einstellbaren Stabilisator (120) und den dritten einstellbaren Stabilisator (130) umfasst;
das Verfahren umfassend:
a. Erweitern des ersten, des zweiten, des dritten und des vierten einstellbaren Stabilisators (110, 120, 130, 140) in eine erste Konfiguration, wobei in der ersten Konfiguration jeder einstellbare Stabilisator in einer Kalibrierungserweiterung ist und die erste Ebene parallel zu einer Referenzebene ist, die durch Kontaktpunkte der distalen Enden des ersten, des zweiten, des dritten und des vierten einstellbaren Stabilisators (110, 120, 130, 140) mit der Bodenoberfläche definiert ist;
b. derartiges Einstellen des ersten Stabilisatorpaars, dass der erste, der zweite, der dritte und der vierte einstellbare Stabilisator (110, 120, 130, 140) zu einer zweiten Konfiguration gelangen, wobei in der zweiten Konfiguration:
entweder der Neigungssensor anzeigt, dass die erste Ebene parallel zu einer ersten Achse einer Zielebene ist; oder
der erste einstellbare Stabilisator (110) und der zweite einstellbare Stabilisator (120) die maximale Erweiterung erreicht haben;
c. derartiges Einstellen des zweiten Stabilisatorpaars, dass der erste, der zweite, der dritte und der vierte einstellbare Stabilisator (110, 120, 130, 140) zu einer dritten Konfiguration gelangen, wobei in der dritten Konfiguration:
entweder der Neigungssensor anzeigt, dass die erste Ebene parallel zu einer zweiten Achse der Zielebene ist; oder
der zweite einstellbare Stabilisator (120) und der dritte einstellbare Stabilisator (130) die maximale Erweiterung erreicht haben.

2. Verfahren nach Anspruch 1, wobei Schritt a) eine erste Stufe und eine zweite Stufe umfasst, wobei:
die erste Stufe das Erweitern des ersten, des zweiten, des dritten und des vierten einstellbaren Stabilisators (110, 120, 130, 140) in eine Primärkonfiguration umfasst, wobei in der Primärkonfiguration jeder einstellbare Stabilisator in der maximalen Erweiterung ist und die erste Ebene parallel zu einer Referenzebene ist, die durch die Kontaktpunkte der distalen Enden des ersten, des zweiten, des dritten und des vierten einstellbaren Stabilisators (110, 120, 130, 140) mit der Bodenoberfläche definiert ist; und
die zweite Stufe ein Einziehen des ersten, des zweiten, des dritten und des vierten einstellbaren Stabilisators (110, 120, 130, 140) in die erste Konfiguration umfasst.

3. Verfahren nach Anspruch 1 oder 2, ferner umfassend einen Schritt nach Schritt c) eines Verwendens des Neigungssensors, um zu bestimmen, ob die erste Ebene parallel zu der Zielebene ist, und in einem Fall, dass der Neigungssensor anzeigt, dass die erste Ebene nicht parallel zu der Zielebene ist:
d. derartiges Einstellen des ersten Stabilisatorpaars, dass der erste, der zweite, der dritte und der vierte einstellbare Stabilisator (110, 120, 130, 140) zu einer vierten Konfiguration gelangen, wobei in der vierten Konfiguration:
entweder der Neigungssensor anzeigt, dass die erste Ebene parallel zu der ersten Achse ist; oder
der erste einstellbare Stabilisator (110) und der zweite einstellbare Stabilisator (120) die Kalibrierung oder die maximale Erweiterung erreicht haben; und
e. derartiges Einstellen des zweiten Stabilisatorpaars, dass der erste, der zweite, der dritte und der vierte einstellbare Stabilisator (110, 120, 130, 140) zu einer fünften Konfiguration gelangen, wobei in der fünften Konfiguration:
entweder der Neigungssensor anzeigt, dass die erste Ebene parallel zu der zweiten Achse ist; oder
der erste einstellbare Stabilisator (110) und der zweite einstellbare Stabilisator (120) die Kalibrierung oder die maximale Erweiterung erreicht haben.

4. Verfahren nach einem der vorstehenden Ansprüche, ferner umfassend einen Schritt nach Schritt c) oder e) des Verwendens des Neigungssensors, um zu bestimmen, ob die erste Ebene parallel zu der ersten Achse und der zweiten Achse ist, und in einem Fall, dass der erste Neigungssensor anzeigt, dass die erste Ebene nicht parallel zu der ersten und der zweiten Achse ist, das Erweitern des ersten Stabilisatorpaars und des zweiten Stabilisatorpaars auf die maximale Erweiterung.

5. Verfahren nach einem der Ansprüche 1 bis 4, wobei der erste, der zweite, der dritte und der vierte einstellbare Stabilisator jeweils umfassen:
einen Hydraulikzylinder, der konfiguriert ist, um erweiterbar zu sein; und
eine Stützplatte, die konfiguriert ist, um den Boden in Eingriff zu nehmen.

6. Verfahren nach Anspruch 5, wobei der erste, der zweite, der dritte und der vierte einstellbare Stabilisator jeweils ferner einen mechanischen Arm umfassen, wobei jeder des ersten, des zweiten, des dritten und des vierten einstellbaren Stabilisators (110, 120, 130, 140) in einer angehobenen Position gelagert ist und wobei der mechanische Arm konfiguriert ist, um jeden Stabilisator vor Schritt a) in eine abgesenkte Position abzusenken.

7. Verfahren nach einem der vorstehenden Ansprüche, wobei das Bestimmen, ob die erste Ebene parallel zu der ersten Achse oder der zweiten Achse ist, ein Vergleichen eines Neigungswinkels mit einem Schwellenwinkel umfasst.

8. Verfahren nach Anspruch 7, wobei der Schwellenwinkel eine Toleranz des Neigungssensors umfasst.

9. Verfahren nach einem der vorstehenden Ansprüche, wobei die Arbeitsmaschine (100) einen Oberwagen, umfassend den Neigungssensor, und einen Unterwagen, umfassend die erste Ebene, umfasst, wobei:
der Oberwagen konfiguriert ist, um in Bezug auf den Unterwagen um eine dritte Achse herum drehbar zu sein;
die dritte Achse zu der ersten Achse und der zweiten Achse senkrecht ist; und
die Verfahrensschritte des Verwendens des Neigungssensors, um zu bestimmen, ob die erste Ebene parallel zu der Zielebene ist, ferner das Verwenden eines Drehwinkels des Oberwagens in Bezug auf den Unterwagen umfasst, um zu bestimmen, ob die erste Ebene parallel zu der ersten Achse oder der zweiten Achse ist.

10. Verfahren nach einem der vorstehenden Ansprüche, wobei der Neigungssensor einen ersten Neigungssensor und einen zweiten Neigungssensor umfasst, wobei der erste Neigungssensor konfiguriert ist, um eine Neigung um eine Primärachse herum zu erfassen, und wobei der zweite Neigungssensor konfiguriert ist, um die Neigung um eine Sekundärachse herum zu erfassen.

11. Verfahren nach einem der Ansprüche 4 bis 10, wobei die Arbeitsmaschine (100) ferner einen Drucksensor umfasst, der konfiguriert ist, um einen Druck des Hydraulikzylinders jedes einstellbaren Stabilisators zu erfassen, wobei eine Erweiterung jedes einstellbaren Stabilisators durch das Verwenden des Drucksensors bestimmt wird.

12. Vorrichtung zum Einstellen einer ersten Ebene einer Arbeitsmaschine (100), wobei die Vorrichtung umfasst:
einen ersten einstellbaren Stabilisator (110), einen zweiten einstellbaren Stabilisator (120), einen dritten einstellbaren Stabilisator (130) und einen vierten einstellbaren Stabilisator (140), wobei:
der erste, der zweite, der dritte und der vierte einstellbare Stabilisator (110, 120, 130, 140) jeweils zwischen einer minimalen Erweiterung und einer maximalen Erweiterung erweiterbar sind, wobei ein Längenunterschied zwischen der minimalen Erweiterung und der maximalen Erweiterung für jeden einstellbaren Stabilisator gleich ist;
der erste, der zweite, der dritte und der vierte einstellbare Stabilisator (110, 120, 130, 140) konfiguriert sind, um die Arbeitsmaschine zu stützen, wenn ein distales Ende jedes einstellbaren Stabilisators in Kontakt mit einer Bodenoberfläche ist;
ein erstes Stabilisatorpaar den ersten einstellbaren Stabilisator (110) und den zweiten einstellbaren Stabilisator (120) umfasst; und
ein zweites Stabilisatorpaar den zweiten einstellbaren Stabilisator (120) und den dritten einstellbaren Stabilisator (130) umfasst;
einen Neigungssensor; und
eine Steuerung, die konfiguriert ist zum:
a. Erweitern des ersten, des zweiten, des dritten und des vierten einstellbaren Stabilisators (110, 120, 130, 140) in eine erste Konfiguration, wobei in der ersten Konfiguration jeder einstellbare Stabilisator in einer Kalibrierungserweiterung ist und die erste Ebene parallel zu einer Referenzebene ist, die durch die Kontaktpunkte der distalen Enden des ersten, des zweiten, des dritten und des vierten einstellbaren Stabilisators (110, 120, 130, 140) mit der Bodenoberfläche definiert ist;
b. derartiges Einstellen des ersten Stabilisatorpaars, dass der erste, der zweite, der dritte und der vierte einstellbare Stabilisator (110, 120, 130, 140) zu einer zweiten Konfiguration gelangen, wobei in der zweiten Konfiguration:
entweder der Neigungssensor anzeigt, dass die erste Ebene parallel zu einer ersten Achse einer Zielebene ist; oder
der erste einstellbare Stabilisator (110) und der zweite einstellbare Stabilisator (120) die maximale Erweiterung erreicht haben;
c. derartiges Einstellen des zweiten Stabilisatorpaars, dass der erste, der zweite, der dritte und der vierte einstellbare Stabilisator (110, 120, 130, 140) zu einer dritten Konfiguration gelangen, wobei in der dritten Konfiguration:
entweder der Neigungssensor anzeigt, dass die erste Ebene parallel zu einer zweiten Achse der Zielebene ist; oder
der zweite einstellbare Stabilisator (120) und der dritte einstellbare Stabilisator (130) die maximale Erweiterung erreicht haben.

13. Vorrichtung nach Anspruch 12, wobei Schritt a) eine erste Stufe und eine zweite Stufe umfasst, wobei:
die erste Stufe das Erweitern des ersten, des zweiten, des dritten und des vierten einstellbaren Stabilisators (110, 120, 130, 140) in eine Primärkonfiguration umfasst, wobei in der Primärkonfiguration jeder einstellbare Stabilisator in der maximalen Erweiterung ist und die erste Ebene parallel zu einer Referenzebene ist, die durch die Kontaktpunkte der distalen Enden des ersten, des zweiten, des dritten und des vierten einstellbaren Stabilisators (110, 120, 130, 140) mit der Bodenoberfläche definiert ist; und
die zweite Stufe das Einziehen des ersten, des zweiten, des dritten und des vierten einstellbaren Stabilisators (110, 120, 130, 140) in die erste Konfiguration umfasst.

14. Vorrichtung nach Anspruch 12 oder 13, wobei nach Schritt c) die Steuerung ferner konfiguriert ist, um den Neigungssensor zu verwenden, um zu bestimmen, ob die erste Ebene parallel zu der Zielebene ist, und in einem Fall, dass der Neigungssensor anzeigt, dass die erste Ebene nicht parallel zu der Zielebene ist, die Steuerung konfiguriert ist zum:
d. derartigen Einstellen des ersten Stabilisatorpaars, dass der erste, der zweite, der dritte und der vierte einstellbare Stabilisator (110, 120, 130, 140) zu einer vierten Konfiguration gelangen, wobei in der vierten Konfiguration:
entweder der Neigungssensor anzeigt, dass die erste Ebene parallel zu der ersten Achse ist; oder
der erste einstellbare Stabilisator (110) und der zweite einstellbare Stabilisator (120) die Kalibrierung oder die maximale Erweiterung erreicht haben; und
e. derartigen Einstellen des zweiten Stabilisatorpaars, dass der erste, der zweite, der dritte und der vierte einstellbare Stabilisator (110, 120, 130, 140) zu einer fünften Konfiguration gelangen, wobei in der fünften Konfiguration:
entweder der Neigungssensor anzeigt, dass die erste Ebene parallel zu der zweiten Achse ist; oder
der erste einstellbare Stabilisator (110) und der zweite einstellbare Stabilisator (120) die Kalibrierung oder die maximale Erweiterung erreicht haben.

15. Arbeitsmaschine, umfassend die Vorrichtung nach einem der Ansprüche 12 bis 14.

## Revendications

1. Procédé de réglage d'un premier plan d'une machine de travail (100), dans lequel la machine de travail comprend un premier stabilisateur réglable (110), un deuxième stabilisateur réglable (120), un troisième stabilisateur réglable (130), un quatrième stabilisateur réglable (140) et un capteur d'inclinaison, dans lequel :
les premier, deuxième, troisième et quatrième stabilisateurs réglables (110, 120, 130, 140) sont chacun extensibles entre une extension minimale et une extension maximale, dans lequel une différence de longueur entre l'extension minimale et l'extension maximale est la même pour chaque stabilisateur réglable ;
les premier, deuxième, troisième et quatrième stabilisateurs réglables (110, 120, 130, 140) sont conçus pour supporter la machine de travail lorsqu'une extrémité distale de chaque stabilisateur réglable est en contact avec la surface du sol ;
une première paire de stabilisateurs comprend le premier stabilisateur réglable (110) et le deuxième stabilisateur réglable (120) ; et
une seconde paire de stabilisateurs comprend le deuxième stabilisateur réglable (120) et le troisième stabilisateur réglable (130) ;
le procédé comprenant :
a. l'extension des premier, deuxième, troisième et quatrième stabilisateurs réglables (110, 120, 130, 140) vers une première configuration, dans lequel dans la première configuration chaque stabilisateur réglable est à une extension d'étalonnage et le premier plan est parallèle à un plan de référence défini par des points de contact des extrémités distales des premier, deuxième, troisième et quatrième stabilisateurs réglables (110, 120, 130, 140) avec la surface du sol ;
b. le réglage de la première paire de stabilisateurs de telle sorte que les premier, deuxième, troisième et quatrième stabilisateurs réglables (110, 120, 130, 140) arrivent à une deuxième configuration, dans lequel dans la deuxième configuration :
soit le capteur d'inclinaison indique que le premier plan est parallèle à un premier axe d'un plan cible ; soit
le premier stabilisateur réglable (110) et le deuxième stabilisateur réglable (120) ont atteint l'extension maximale ;
c. le réglage de la seconde paire de stabilisateurs de telle sorte que les premier, deuxième, troisième et quatrième stabilisateurs réglables (110, 120, 130, 140) arrivent à une troisième configuration, dans lequel dans la troisième configuration :
soit le capteur d'inclinaison indique que le premier plan est parallèle à un deuxième axe du plan cible ; soit
le deuxième stabilisateur réglable (120) et le troisième stabilisateur réglable (130) ont atteint l'extension maximale.

2. Procédé selon la revendication 1, dans lequel l'étape a) comprend une première étape et une seconde étape, dans lequel :
la première étape comprend l'extension des premier, deuxième, troisième et quatrième stabilisateurs réglables (110, 120, 130, 140) vers une configuration principale, dans lequel dans la configuration principale chaque stabilisateur réglable est à l'extension maximale et le premier plan est parallèle à un plan de référence défini par des points de contact des extrémités distales des premier, deuxième, troisième et quatrième stabilisateurs réglables (110, 120, 130, 140) avec la surface du sol ; et
la seconde étape comprend la rétraction des premier, deuxième, troisième et quatrième stabilisateurs réglables (110, 120, 130, 140) dans la première configuration.

3. Procédé selon la revendication 1 ou 2 comprenant en outre une étape après l'étape c) consistant à utiliser le capteur d'inclinaison pour déterminer si le premier plan est parallèle ou non au plan cible, et au cas où le capteur d'inclinaison indiquerait que le premier plan n'est pas parallèle au plan cible :
d. le réglage de la première paire de stabilisateurs de telle sorte que les premier, deuxième, troisième et quatrième stabilisateurs réglables (110, 120, 130, 140) arrivent à une quatrième configuration, dans lequel dans la quatrième configuration :
soit le capteur d'inclinaison indique que le premier plan est parallèle au premier axe ; soit
le premier stabilisateur réglable (110) et le deuxième stabilisateur réglable (120) ont atteint l'extension d'étalonnage ou maximale ; et
e. le réglage de la seconde paire de stabilisateurs de telle sorte que les premier, deuxième, troisième et quatrième stabilisateurs réglables (110, 120, 130, 140) arrivent à une cinquième configuration, dans lequel dans la cinquième configuration :
soit le capteur d'inclinaison indique que le premier plan est parallèle au deuxième axe ; soit
le premier stabilisateur réglable (110) et le deuxième stabilisateur réglable (120) ont atteint l'extension d'étalonnage ou maximale.

4. Procédé selon l'une quelconque des revendications précédentes comprenant en outre une étape après l'étape c) ou e) consistant à utiliser le capteur d'inclinaison pour déterminer si le premier plan est parallèle ou non au premier axe et au deuxième axe et au cas où le premier capteur d'inclinaison indiquerait que le premier plan n'est pas parallèle aux premier et deuxième axes, l'extension de la première paire de stabilisateurs et de la seconde paire de stabilisateurs jusqu'à l'extension maximale.

5. Procédé selon l'une quelconque des revendications 1 à 4 dans lequel les premier, deuxième, troisième et quatrième stabilisateurs réglables comprennent chacun :
un vérin hydraulique conçu pour être extensible ; et
une plaque de support conçue pour venir en prise avec le sol.

6. Procédé selon la revendication 5 dans lequel les premier, deuxième, troisième et quatrième stabilisateurs réglables comprennent chacun en outre un bras mécanique, dans lequel chacun des premier, deuxième, troisième et quatrième stabilisateurs réglables (110, 120, 130, 140) est rangé dans une position relevée et dans lequel le bras mécanique est conçu pour abaisser chaque stabilisateur dans une position abaissée avant l'étape a).

7. Procédé selon l'une quelconque des revendications précédentes dans lequel la détermination établissant si le premier plan est parallèle au premier axe ou au deuxième axe comprend la comparaison d'un angle d'inclinaison à un angle seuil.

8. Procédé selon la revendication 7 dans lequel l'angle seuil comprend une tolérance du capteur d'inclinaison.

9. Procédé selon l'une quelconque des revendications précédentes dans lequel la machine de travail (100) comprend un chariot supérieur comprenant le capteur d'inclinaison et un chariot inférieur comprenant le premier plan, dans lequel :
le chariot supérieur est conçu pour pouvoir tourner autour d'un troisième axe par rapport au chariot inférieur ;
le troisième axe est perpendiculaire au premier axe et au deuxième axe ; et
les étapes de procédé consistant à utiliser le capteur d'inclinaison pour déterminer si le premier plan est parallèle ou non au plan cible comprennent en outre l'utilisation d'un angle de rotation du chariot supérieur par rapport au chariot inférieur pour déterminer si le premier plan est parallèle au premier axe ou au deuxième axe.

10. Procédé selon l'une quelconque des revendications précédentes, dans lequel le capteur d'inclinaison comprend un premier capteur d'inclinaison et un deuxième capteur d'inclinaison, dans lequel le premier capteur d'inclinaison est configuré pour détecter une inclinaison autour d'un axe primaire et dans lequel le deuxième capteur d'inclinaison est configuré pour détecter une inclinaison autour d'un axe secondaire.

11. Procédé selon l'une quelconque des revendications 4 à 10 dans lequel la machine de travail (100) comprend en outre un capteur de pression configuré pour détecter une pression du vérin hydraulique de chaque stabilisateur réglable, dans lequel une extension de chaque stabilisateur réglable est déterminée en utilisant le capteur de pression.

12. Dispositif de réglage d'un premier plan d'une machine de travail (100), le dispositif comprenant :
un premier stabilisateur réglable (110), un deuxième stabilisateur réglable (120), un troisième stabilisateur réglable (130) et un quatrième stabilisateur réglable (140), dans lequel :
les premier, deuxième, troisième et quatrième stabilisateurs réglables (110, 120, 130, 140) sont chacun extensibles entre une extension minimale et une extension maximale, dans lequel une différence de longueur entre l'extension minimale et l'extension maximale est la même pour chaque stabilisateur réglable ;
les premier, deuxième, troisième et quatrième stabilisateurs réglables (110, 120, 130, 140) sont conçus pour supporter la machine de travail lorsqu'une extrémité distale de chaque stabilisateur réglable est en contact avec la surface du sol ;
une première paire de stabilisateurs comprend le premier stabilisateur réglable (110) et le deuxième stabilisateur réglable (120) ; et
une seconde paire de stabilisateurs comprend le deuxième stabilisateur réglable (120) et le troisième stabilisateur réglable (130) ;
un capteur d'inclinaison ; et
un dispositif de commande pour :
a. étendre les premier, deuxième, troisième et quatrième stabilisateurs réglables (110, 120, 130, 140) vers une première configuration, dans lequel dans la première configuration chaque stabilisateur réglable est à une extension d'étalonnage et le premier plan est parallèle à un plan de référence défini par des points de contact des extrémités distales des premier, deuxième, troisième et quatrième stabilisateurs réglables (110, 120, 130, 140) avec la surface du sol ;
b. régler la première paire de stabilisateurs de telle sorte que les premier, deuxième, troisième et quatrième stabilisateurs réglables (110, 120, 130, 140) arrivent à une deuxième configuration, dans lequel dans la deuxième configuration :
soit le capteur d'inclinaison indique que le premier plan est parallèle à un premier axe d'un plan cible ; soit
le premier stabilisateur réglable (110) et le deuxième stabilisateur réglable (120) ont atteint l'extension maximale ;
c. régler de la seconde paire de stabilisateurs de telle sorte que les premier, deuxième, troisième et quatrième stabilisateurs réglables (110, 120, 130, 140) arrivent à une troisième configuration, dans lequel dans la troisième configuration :
soit le capteur d'inclinaison indique que le premier plan est parallèle à un deuxième axe du plan cible ; soit
le deuxième stabilisateur réglable (120) et le troisième stabilisateur réglable (130) ont atteint l'extension maximale.

13. Dispositif selon la revendication 12 dans lequel l'étape a) comprend une première étape et une seconde étape, dans lequel :
la première étape comprend l'extension des premier, deuxième, troisième et quatrième stabilisateurs réglables (110, 120, 130, 140) vers une configuration principale, dans lequel dans la configuration principale chaque stabilisateur réglable est à l'extension maximale et le premier plan est parallèle à un plan de référence défini par des points de contact des extrémités distales des premier, deuxième, troisième et quatrième stabilisateurs réglables (110, 120, 130, 140) avec la surface du sol ; et
la seconde étape comprend la rétraction des premier, deuxième, troisième et quatrième stabilisateurs réglables (110, 120, 130, 140) dans la première configuration.

14. Dispositif selon la revendication 12 ou 13 dans lequel après l'étape c) le dispositif de commande est en outre configuré pour utiliser le capteur d'inclinaison pour déterminer si le premier plan est parallèle ou non au plan cible, et au cas où le capteur d'inclinaison indiquerait que le premier plan n'est pas parallèle au plan cible le dispositif de commande est configuré pour :
d. régler la première paire de stabilisateurs de telle sorte que les premier, deuxième, troisième et quatrième stabilisateurs réglables (110, 120, 130, 140) arrivent à une quatrième configuration, dans lequel dans la quatrième configuration :
soit le capteur d'inclinaison indique que le premier plan est parallèle au premier axe ; soit
le premier stabilisateur réglable (110) et le deuxième stabilisateur réglable (120) ont atteint l'extension d'étalonnage ou maximale ; et
e. régler la seconde paire de stabilisateurs de telle sorte que les premier, deuxième, troisième et quatrième stabilisateurs réglables (110, 120, 130, 140) arrivent à une cinquième configuration, dans lequel dans la cinquième configuration :
soit le capteur d'inclinaison indique que le premier plan est parallèle au deuxième axe ; soit
le premier stabilisateur réglable (110) et le deuxième stabilisateur réglable (120) ont atteint l'extension d'étalonnage ou maximale.

15. Machine de travail comprenant le système selon l'une quelconque des revendications 12 à 14.
